# EUROPÄISCHE PATENTSCHRIFT

(11) **EP 1 893 407 B1**
(45) Veröffentlichungstag und Bekanntmachung des Hinweises auf die Patenterteilung: **04.12.2019**
(21) Anmeldenummer: 06761674.8
(22) Anmeldetag: 20.06.2006
(51) Int. Cl.: B32B 27/32

(54) **MEHRLAGIGE FOLIE MIT EINER BARRIERE- UND EINER ANTISTATISCHEN LAGE**
MULTI-LAYER FILM COMPRISING A BARRIER LAYER AND AN ANTISTATIC LAYER
FILM MULTICOUCHE COMPRENANT UNE COUCHE BARRIERE ET UNE COUCHE ANTISTATIQUE

(30) Priorität: 22.06.2005 DE 102005028778
(43) Veröffentlichungstag der Anmeldung: 05.03.2008
(73) Patentinhaber: Greif Flexibles Trading Holding B.V., 2316 XC Leiden (NL)
(72) Erfinder: TAVSANLI, Bülent, Sahil yolu Kartal Istanbul (TR); DOGAN, Afsin, Bakirkoy Istanbul (TR); GREWE, Andreas, 48432 Rheine (DE); BOSTAN, Atilla Teoman, Bahcelievler Istanbul (TR)
(74) Vertreter: Meissner Bolte Partnerschaft mbB
(86) Internationale Anmeldenummer: PCT/DE2006/001053
(87) Internationale Veröffentlichungsnummer: WO 2006/136144

(56) Entgegenhaltungen:
- WO-A-03/029000

## Beschreibung

Die Erfindung betrifft einen flexiblen Behälter nach dem Oberbegriff des Anspruchs 1.

Aus der WO 03/029000 ist eine mehrlagige Folie - sowie eine daraus hergestellte Verpackung - bekannt, die eine Barrierelage aus Aluminium aufweist und weitere Kunststofflagen enthält: z. B. eine Lage aus Polyesterharz und eine Versiegelungslage aus einem Polyolefin-basierten Harz wie Polypropylen und Polyethylen. Die Versiegelungslage wird sowohl in der Lebensmittelindustrie als auch bei medizinischen Verpackungen verwendet. Problematisch kann dabei sein, dass die Versiegelungskraft herstellungsbedingt mit erheblichen Schankungen behaftet ist, so dass sich die Verpackungen manchmal nur schwierig oder kaum öffnen lassen. Ebenso schwankend werden dadurch die Eigenschaften beeinflusst, die eine Umfärbung der Siegelnaht beim Öffnen betreffen, so dass nicht immer anhand der Farbgebung der Versiegelungsfläche sicher erkennbar ist, ob eine Verpackung korrekt versiegelt wurde bzw. bereits einmal geöffnet wurde. Die WO 03/029000 schlägt eine Folie vor, die unter anderem exzellent einfach zu öffnen sein soll und exzellente Umfärbungseigenschaften aufweist. Dies wird erreicht durch eine Versiegelungslage, die aus zwei Schichten besteht. Die erste Schicht besteht aus einem Gemisch, welches unter anderem zwei Polyethylensorten niedriger Dichte enthält. Die zweite Schicht enthält Polyethylen hoher Dichte.

Eine mehrlagige Folie ist aus der US 5 110 669 bekannt. Sie dient zum Verpacken von elektrostatisch empfindlichen Produkten wie z. B. Elektronikbauteilen. Aus der DE 92 07 044 ist eine transparente antistatische Verbundfolie bekannt, die ebenfalls für Beutel und Umhüllungen für elektronische Bauteile bestimmt ist. Jeweils ist eine metallische Schicht vorgesehen, die den Inhalt der Verpackung gegen elektromagnetische (Radiofrequenz-) Felder abschirmt, so dass diese metallische Schicht als "Barrierelage" bezeichnet werden kann, selbst wenn sie wie im Falle der zweitgenannten DE 92 07 044 so dünn ist, dass die Verbundfolie transparent ist.

Aus der DE 44 31 046 A1 ist ein Kunststoffverpackungsbehälter bekannt, bei dem die Behälterwandung durch eine Verbundfolie gebildet ist, die eine verbesserte elektrostatische Ableitfähigkeit aufweisen soll. Hierzu weist die zum Produkt gewandte Seite der Verbundfolie eine Perforation auf, um einen Ladungstransport elektrischer Ladung zu einer elektrisch leitfähigen Zwischenschicht in der Verbundfolie zu ermöglichen. Ein solcher Behälter ist nicht für den Kontakt mit Lebensmitteln oder Pharmazeutika zugelassen, da deren Kontakt mit der elektrisch leitfähigen, beispielsweise metallischen, Zwischenschicht nicht zulässig ist.

Aus der Praxis sind weiterhin mehrlagige Folien mit einer metallischen Barrierelage bekannt. Diese werden beispielsweise zur Bildung flexibler Behälter, beispielsweise als Folienbeutel oder als Inliner für eine Großverpackung wie einen FIBC, der nachfolgend stets als "Big Bag" bezeichnet wird. Die Barrierelage soll in diesen Fällen üblicherweise einen Schutz des verpackten Produktes gegen Luft oder speziell Sauerstoff oder Feuchtigkeit bieten.

Dabei ist es aus der Praxis bekannt, zum Schutz der sehr dünnen Barrierelage eine dehnungsarme Schicht in der Folie vorzusehen, so dass Zugkräfte im Wesentlichen von dieser dehnungsarmen Schicht aufgenommen werden und die Barrierelage auf diese Weise vor Überdehnungen und entsprechenden Folgeschäden wie Rissen geschützt ist.

In der Praxis besteht das Problem, einen flexiblen Behälter bzw. eine zu dessen Herstellung geeignete Folie zu schaffen, der einerseits elektrisch ableitfähig ist, andererseits aber auch lebensmittelrechtlich zulässig ist uns somit beispielsweise zum Verpacken von Produkten der Lebensmittelindustrie oder Pharmazie geeignet ist, da die einzelnen Anforderungen erhebliche Zielkonflikte für die einzelnen Schichten der Folie darstellen:
Die Barrierelage selbst ist - unter anderem aus wirtschaftlichen Gründen aufgrund des Materialpreises der üblicherweise verwendeten Metalle - so dünn und so empfindlich, dass sie nach innen, also zu den Produkten hin, geschützt werden muss, während nach außen die dehnungsarme Lage einen derartigen Schutz bewirkt.

Die innere Schutzschicht muss zugunsten eines wirksamen Schutzes in dem wirtschaftlich vertretbaren Rahmen möglichst dick sein, soll jedoch andererseits möglichst dünn sein, um den Aufbau elektrostatischer Ladungen zu vermeiden und eine entsprechend niedrige Durchschlagsspannung zur Barrierelage zu ermöglichen, da insbesondere für viele staub- oder pulverförmige Produkte ansonsten die Gefahr von Explosionen oder Verpuffungen aufgrund elektrostatischer Aufladungen besteht und daher die Forderung besteht, dass der Behälter erdungs- bzw. ableitfähig ausgestaltet sein muss.

Die für derartige innere Schutzschichten geeigneten Materialien sind in der Regel nicht für Lebensmittel geeignet, und daher beispielsweise nicht lebensmittelrechtlich zugelassen, beispielsweise wenn es sich um einen mit einem Antistatikum versehenen Kunststoff handelt. Zudem weisen derartige Materialien schlechte Eigenschaften für eine Verschweißbarkeit auf, so dass die Herstellung eines Behälters aus entsprechenden Folienstücken problematisch sein kann, bzw. der Behälter nicht in dem gewünschten Maße belastbar ist.

Werden jedoch lebensmittelrechtlich zugelassene und gut verschweißbare innere Schutzschichten verwendet, so weisen diese derart hohe elektrische Widerstände auf, dass sie beispielsweise mittels der oben erwähnten mechanischen Perforationen auf eine geeignete, niedrige Durchschlagsspannung gebracht werden können, wobei jedoch durch die Perforation wiederum die lebensmittelrechtliche Zulassung nicht mehr gegeben ist.

Der vorliegenden Erfindung liegt die Aufgabe zugrunde, einen flexiblen Behälter zu schaffen, der als Inliner für einen Außenbehälter dient und eine mehrlagige Folie aufweist, wobei durch die Folie bzw. den Behälter sowohl ein optimaler Produktschutz mittels einer Barrierelage, als auch der Produktschutz im Schweißnahtbereich durch eine hohe Schweißnahtfestigkeit, als auch die elektrische Ableitfähigkeit zur Vermeidung elektrostatischer Aufladungen und der damit verbundenen Gefahren ermöglicht ist, und zwar auch für Lebensmittel oder pharmazeutische Produkte.

Diese Aufgabe wird durch einen Behälter nach Anspruch 1 gelöst.

Die Erfindung schlägt mit anderen Worten vor, den Behälter mit einer Folie auszugestalten, die wie folgt aufgebaut ist: die Barrierelage ist auf einer Seite mit einer dehnungsarmen Kunststofflage versehen und auf der anderen Seite ist eine antistatische Kunststofflage vorgesehen, wobei die antistatische Kunststofflage auf zwei unterschiedliche Arten für Lebensmittel geeignet ausgestaltet werden kann:
Entweder wird die antistatische Lage mit einer für Lebensmittel geeigneten Lage aus einem Polyethylen mit einer Schichtdicke von 5 bis 20 µm abgedeckt, während die antistatische Lage eine Schichtdicke von 10 bis 150 µm aufweist. Trotz ihrer vorschlagsgemäß geringen Schichtdicke ermöglicht die für Lebensmittel geeignete Lage aus einem Polyethylen eine Trennung der evtl. in die Folie eingepackten Lebensmittel von der antistatischen Kunststofflage, und die geringe Schichtdicke ermöglicht andererseits, dass die Durchlagspannung der Folie ausreichend niedrig gehalten werden kann, um unzulässig hohe elektrostatische Aufladungen zu vermeiden. Vorschlagsgemäß hält die Folie nämlich durch die antistatische Ausgestaltung der Kunststofflage eine Durchschlagspannung von weniger als 4 kV ein.

Oder die antistatische Lage selbst ist als die für Lebensmittel geeignete Lage ausgestaltet, nämlich als Lage aus Polyethylen, und enthält ein für Lebensmittel geeignetes Additiv in Form eines Antistatikums, so dass eine Trennung der evtl. in die Folie eingepackten Lebensmittel von der antistatischen Kunststofflage nicht erforderlich ist und auch bei einer größeren Schichtdicke der antistatischen Kunststofflage die Durchlagspannung der Folie ausreichend niedrig gehalten werden kann.

Jedenfalls besteht vorschlagsgemäß die antistatische Lage aus Polyethylen, dem ein Antistatikum beigemischt ist. Derartige Antistatika sind von verschiedenen Herstellern handelsüblich. Der oben genannten zweiten Variante des vorliegenden Vorschlags entsprechend kann das Antistatikum für Lebensmittel geeignet sein, so dass die Abdeckung der antistatischen Lage mit einer für Lebensmittel geeigneten, weiteren Lage aus Polyethylen nicht erforderlich ist.

Vorschlagsgemäß wird ein so genanntes Permanentantistatikum verwendet, dessen Wirksamkeit auch über einen für Antistatika ansonsten üblichen Zeitraum von 18 Monaten hinaus gewährleistet ist, so dass der Behälter mehrfach wiederverwendbar ist bzw. über längere Zeit - leer oder mit einem Produkt befüllt - gelagert werden kann und auch dann noch die Wirksamkeit des Antistatikums sichergestellt ist.

Eine vorschlagsgemäße "antistatische" Lage ist von einer "ableitfähigen" Lage zu unterscheiden. Ableitfähige Materialien weisen häufig eine Zumischung von Kohlenstoff auf. Eine Koronabehandlung, wie sie bei anderem Folienmaterial zur Vorbereitung vor Verklebungen durchgeführt wird, ist daher bei ableitfähigen Materialien nicht durchführbar. Diese Materialien sind daher nur schlecht verklebbar und schlecht verschweißbar und weisen in Folge dessen nur geringe Nahtfestigkeiten auf.

Im Gegensatz zu den ableitfähigen Materialien ermöglicht die Ausgestaltung der Kunststofflage als antistatische Kunststofflage eine erheblich bessere Verschweißbarkeit, so dass nicht nur aufgrund der Barrierelage über die Fläche der Folie selbst eine zuverlässige Barrierewirkung sichergestellt werden kann, sondern auch im Bereich der Schweißnähte, wenn beispielsweise die Folie zu einem Behälter verarbeitet wird und eine hohe Schweißnahtfestigkeit erzielt werden kann, so dass auch in diesem Bereich ein optimaler Produktschutz gegeben ist.

Eine derartig hohe Schweißnahtfestigkeit könnte auch gewährleistet werden, wenn auf die antistatische Ausrüstung der entsprechenden Kunststofflage verzichtet wird. Vorschlagsgemäß wird jedoch der Vorteil erzielt, dass durch die antistatische Ausgestaltung der Kunststofflage eine Durchschlagspannung von weniger als 4 kV eingehalten wird, so dass statische Aufladungen, beispielsweise eines aus der Folie hergestellten Behälters, nicht in einem unzulässigen Maß erfolgen, sondern vielmehr bei Erreichen der Durchschlagspannung die elektrischen Ladungen abfließen können und somit nicht nur für das Produkt selbst, sondern auch für Anlagen und Personal ein besonders hohes Maß an Sicherheit erzielt wird.

Vorschlagsgemäß kann die Folie besonders wirtschaftlich mit folgendem Aufbau geschaffen werden: Die Barrierelage weist auf der einen Seite eine dehnungsarme Lage auf und auf der anderen Seite, nämlich zum zu verpackenden Produkt gewandt, eine antistatische Kunststofflage, wobei gegebenenfalls als nächst benachbarte Schicht und als der dehnungsarmen Lage gegenüberliegende Oberflächenschicht eine für Lebensmittel geeignete Lage vorgesehen ist. Falls die einzelnen Folienlagen nicht beispielsweise im Extrusionsverfahren miteinander verbunden werden, können als zusätzliche Materialien gegebenenfalls noch Haftvermittler vorgesehen sein, ansonsten kann in wirtschaftlich vorteilhafter Weise auf weitere Materialien und weitere Lagen verzichtet werden.

Dadurch, dass vorschlagsgemäß die antistatische Lage entweder mit einer Lage aus für Lebensmittel geeignetem Material versehen ist oder selbst für Lebensmittel geeignet ausgestaltet ist, können Behälter zur Verpackung von Lebensmitteln aus einer derartigen Folie geschaffen werden.

Die Barrierelage kann vorteilhaft aus einer metallischen Schicht bestehen, beispielsweise aus Gold oder anderem Metall. Vorteilhaft kann in an sich bekannter Weise die Barrierelage aus Aluminium bestehen. Dieses Material ist wirtschaftlich erhältlich und verarbeitbar und weist die gewünschten vorteilhaften Barriereeigenschaften auf, wie z. B. eine Wasserdampf- und ggf. Licht- oder Sauerstoffdichtheit. Zudem ist es elektrisch ableitfähig.

Vorteilhaft kann in an sich bekannter Weise die dehnungsarme Lage aus Polyester (PET) bestehen. Dieses lässt sich gut mit der Barrierelage - insbesondere einer solchen aus Aluminium - verbinden und ist auf die Dehnfähigkeit der Barrierelage gut insofern abzustimmen, dass die Barrierelage gegen Überdehnungen geschützt ist. Die dehnungsarme Kunststofflage kann alternativ aus orientiertem Polypropylen (OPP) bestehen, wobei allerdings sowohl PET als auch OPP lediglich beispielhaft genannte Materialien sind, die sich in praktischen Versuchen bewährt haben.

Vorschlagsgemäß besteht die für Lebensmittel geeignete Lage aus einem Polyethylen, beispielsweise aus reinem Polyethylen.

Da die Durchschlagspannung der für Lebensmittel geeigneten Lage vergleichsweise hoch sein kann und beispielsweise bei reinem Polyethylen vergleichsweise hoch ist, ist die für Lebensmittel geeignete Lage vorzugsweise vergleichsweise dünn, nämlich etwa 5 bis 20 µm dick. Insbesondere kann die Schichtdicke dieser Lage etwa 10 - 15 µm betragen, so dass einerseits die Durchschlagspannung nicht unerwünscht hoch ist, andererseits jedoch eine ausreichende mechanische Stabilität dieser Lage sichergestellt ist, so dass Verletzungen dieser Lage und damit ein unerwünschter Kontakt des im Behälter befindlichen Produkts mit einer anderen als der für Lebensmittel geeigneten Lage zuverlässig vermieden werden kann.

Die antistatische Lage kann eine Schichtdicke von etwa 10 bis etwa 150 µm aufweisen, wobei eine geringe Schichtdicke eine niedrige Durchschlagspannung ermöglicht, während eine größere Schichtdicke eine bessere Schweißnahtfestigkeit ermöglicht.

Im Vergleich zu der für Lebensmittel geeigneten Lage kann die antistatische Lage problemlos erheblich dicker sein, nämlich beispielsweise 60 bis 100 µm dick, wobei aufgrund des Antistatikums selbst bei einem kombinierten Aufbau aus beiden Lagen, also für Lebensmittel geeignete Lage plus antistatische Lage, die erforderliche Durchschlagspannung von maximal 4 kV bis zum Erreichen der Barrierelage problemlos eingehalten und so eine ableitfähige Folie geschaffen werden kann.

Insbesondere wenn die antistatische Lage insgesamt für Lebensmittel geeignet ausgestaltet ist, kann sie auch dicker sein als 100 µm, da eine zusätzliche, die Durchschlagspannung heraufsetzende für Lebensmittel geeignete Lage nicht erforderlich ist, so dass eine optimale Schweißnahtfestigkeit bei Wahl eines geeigneten Kunststoffmaterials der antistatische Lage ermöglicht werden kann.

Insbesondere wenn die antistatische Lage grundsätzlich auch aus Polyethylen besteht, wie die eventuell vorgesehene für Lebensmittel geeignete Lage, so wird die hervorragende Schweißnahtfestigkeit von Polyethylen sichergestellt, selbst wenn die Schicht aus reinem PE vergleichsweise dünn und zur Erzielung einer ausreichenden Schweißnahtfestigkeit nicht dick genug ist. Durch die Wahl von PE als Grundmaterial für die antistatische Schicht kann daher eine Schweißnahtfestigkeit erzielt werden, welche die möglichst dünne Ausgestaltung der für Lebensmittel geeigneten Lage ermöglicht und dennoch die zuverlässige Einhaltung einer Durchschlagspannung von maximal 4 kV sicherstellt.

Vorteilhaft ist die Oberfläche der Folie, welche der dehnungsarmen Lage gegenüberliegt, frei von herstellerseitig eingebrachten, regelmäßigen Vertiefungen wie Rillen, Perforationen oder dergleichen, so dass insbesondere für die Verpackung hochempfindlicher Materialien keine anhaftenden Reste oder Verschmutzungen in derartigen Vertiefungen auftreten können. Zudem ist durch die geschlossene Oberflächenausgestaltung sichergestellt, dass kein Kontakt vom Produkt zu der Barrierelage möglich ist, was insbesondere bei der Ausgestaltung der Barrierelage der metallischen Stoffen je nach Produkt unerwünscht sein kann.

Vorteilhaft kann aus der beschriebenen Folie ein flexibler Behälter geschaffen werden, beispielsweise in Form einer reinen Folienverpackung oder als Innenbehälter bzw. "Inliner" für einen weiteren Behälter, beispielsweise für einen Big Bag aus einem textilen Gewebe, für eine Kartonverpackung wie z. B. sogenannte Oktabins, oder auch für Kleinverpackungen wie aus einer Kunststofffolie bestehende Säcke von etwa 25 bis 50 kg Fassungsvermögen.

Vorteilhaft ist die vorgeschlagene Folie bzw. der daraus hergestellte Behälter erdungsfähig. Hierzu sind verschiedene Maßnahmen aus der Praxis bekannt. Die Erdung kann durch Erdungszangen erfolgen, die unmittelbar an den Inliner angesetzt werden, so dass keine speziellen Erdungslaschen am äußeren Behälter erforderlich sind.

Vorteilhaft kann die dehnungsarme Lage an den Rändern der Barrierelage schmaler als die Barrierelage bemessen sein und so einen Streifen der Barrierelage nicht abdecken. So kann ein Inliner für einen Big Bag unter Verwendung einer derartigen Folie geschaffen werden, der am Rand frei liegende Bereiche der Barrierelage aufweist, die einen problemlosen elektrisch leitenden Anschluss an beispielsweise Klemmen zur Erdung des Behälters ermöglicht, ohne dass die Erdungsfähigkeit durch zusätzliche Stoffe, die dem Folienmaterial beigefügt werden müssten, oder durch zusätzliche Bauteile, wie die vorerwähnten Erdungslaschen, sichergestellt werden müsste.

Ein Ausführungsbeispiel einer vorschlagsgemäßen Folie wird anhand der rein schematischen Darstellung nachfolgend näher erläutert.

Darin ist mit 1 insgesamt eine mehrlagige Folie bezeichnet, wobei die einzelnen Lagen rein schematisch und in nicht maßstabsgerechten Größen sowie auseinander gezogen dargestellt sind und wobei in dieser Darstellung auf ggf. vorgesehene Verbindungsmaterialien, wie Haftvermittler oder dergleichen, aus Übersichtlichkeitsgründen verzichtet ist.

Die Folie 1 weist eine Barrierelage 2 aus Aluminium auf, die auf ihre einen Seite mit einer Lage 3 aus einem dehnungsarmen Polyestermaterial beschichtet ist, wobei die dehnungsarme Lage 3 sich nicht über die volle Breite der Barrierelage, also über die volle Breite der Folie 1 erstreckt, sondern zwei Randstreifen der Barrierelage 2 unabgedeckt frei lässt.

Auf der gegenüberliegenden Seite ist die Barrierelage 2 mit einer Lage 4 aus antistatischem Material beschichtet, wobei diese antistatische Lage 4 eine Schichtdicke von etwa 70 µm aufweist. Sie kann aus einer einzigen oder mehreren Schichten, ggf. coextrudierten Schichten, bestehen und weist als Grundmaterial Polyethylen auf, dem ein handelsübliches Permanentantistatikum beigemischt ist. Der Anteil des antistatischen Zusatzstoffes im Polyethylen ist nach der Schichtdicke der antistatischen Lage 4 bemessen sowie nach der Schichtdicke einer weiteren Oberflächenlage. Diese Lage 5 aus für Lebensmittel geeignetem Material besteht aus reinem Polyethylen und weist eine Schichtdicke von 13 µm auf. Die Schichtdicken der Lagen 4 und 5 und der Anteil des antistatischen Materials in der antistatischen Lage 4 ist insgesamt so aufeinander abgestimmt, dass eine Durchschlagspannung von der Oberfläche der für Lebensmittel geeigneten Lage 5 bis zur Barrierelage 2 von weniger als 4 kV sicher eingehalten wird.

Mit der dargestellten Folie können flexible Behälter hergestellt werden, wobei insbesondere vorteilhaft die Lage 5 nach innen, zum Produkt hin ausgerichtet ist, so dass problemlos Lebensmittel innerhalb eines derartigen flexiblen Behälters verpackt sein können.

Wenn die innerste Lage 5 eine vergleichsweise große Schichtdicke aufweist, wird zuverlässig eine hervorragende Schweißnahtfestigkeit der Folie 1 ermöglicht. Allerdings besteht die Gefahr, dass die gewünschte Durchschlagspannung von maximal 4 kV nicht eingehalten, sondern dieser Wert überschritten wird.

Bei Verzicht auf die innerste Lage 5 aus für Lebensmittel geeignetem Material wird dadurch, dass die antistatische Lage 4 Polyethylen als Grundstoff aufweist, eine gute Schweißnahtfestigkeit ermöglicht, wobei jedoch - je nachdem, auf welche Weise die antistatische Lage 4 antistatisch ausgestaltet ist, z. B. wenn ein bestimmtes Antistatikum verwendet worden ist - keine Lebensmittel in einem aus einer derartigen Folie gebildeten Behälter verpackt werden sollten und dieser Behälter keine für Lebensmittel geeignete zum Produkt hin ausgerichtete innere Oberfläche aufweist.

Wenn jedoch die antistatische Lage 4 alternativ zu dem vorbeschriebenen Ausführungsbeispiel sowohl einen für Lebensmittel geeigneten Grundstoff aufweist, z. B. Polyethylen, als auch ein für Lebensmittel geeignetes Antistatikum, so ist die antistatische Lage 4 insgesamt für Lebensmittel geeignet und kann zum Verpacken von Lebensmitteln verwendet werden sowie eine hervorragende Schweißnahtfestigkeit der Folie 1 ermöglichen.

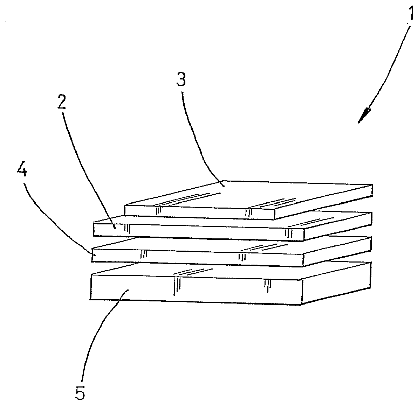

## Patentansprüche

1. Flexibler Behälter,
wobei der Behälter einen Inliner für einen Außenbehälter - wie einen textilen Big Bag, eine Kartonverpackung oder einen aus Kunststoff bestehenden Sack oder Beutel - bildet,
**dadurch gekennzeichnet,**
**dass** der Behälter eine Wandung aufweist, welche aus einer Folie (1) mit den folgenden Merkmalen besteht:
die Folie (1) ist mehrlagig ausgestaltet,
mit einer Barrierelage (2),
einer dehnungsarmen Kunststofflage (3),
und einer antistatischen Kunststofflage (4), die auf der Seite von der Barrierelage (2) angeordnet ist, welche der dehnungsarmen Kunststofflage (3) gegenüberliegt,
die aus mit einem Permanentantistatikum versehenen Polyethylen (PE) besteht,
und welche die Durchschlagspannung der Folie (1) auf weniger als 4kV begrenzt,
und **dass** eine Lage vorgesehen ist, welche die zum Behälterinneren gerichtete Oberfläche der Folie (1) bildet, und die aus einem Polyethylen besteht,
wobei
entweder diese zum Behälterinneren gerichtete Lage der antistatischen Kunststofflage (4) benachbart, von der Barrierelage (2) abgewandt vorgesehen ist, und als Lage (5) 5 bis 20 µm dick ist, und die antistatische Lage (4) 10 bis 150 µm dick ist,
oder die antistatische Kunststofflage (4) als die zum Behälterinneren gerichtete Lage aus Polyethylen ausgestaltet ist, die Polyethylen und ein Antistatikum enthält.

2. Flexibler Behälter nach Anspruch 1 oder 2, **dadurch gekennzeichnet,**
**dass** die Barrierelage (2) aus Aluminium besteht.

3. Flexibler Behälter nach einem der vorhergehenden Ansprüche,
**dadurch gekennzeichnet, dass** die dehnungsarme Lage (3) aus Polyester (PET) besteht.

4. Flexibler Behälter nach einem der vorhergehenden Ansprüche,
**dadurch gekennzeichnet, dass** die aus lebensmittelrechtlich unbedenklichem Material bestehende Lage (5) aus Polyethylen (PE) besteht.

5. Flexibler Behälter nach einem der vorhergehenden Ansprüche,
**dadurch gekennzeichnet, dass** die antistatische Lage (4) etwa 70 bis 100 µm dick ist.

6. Flexibler Behälter nach einem der vorhergehenden Ansprüche,
**dadurch gekennzeichnet, dass** die der dehnungsarmen Lage (3) gegenüberliegende Oberfläche der Folie (1) frei von Vertiefungen ist.

7. Flexibler Behälter nach einem der vorhergehenden Ansprüche,
**dadurch gekennzeichnet, dass** die Folie (1) ableitfähig ausgestaltet ist.

8. Flexibler Behälter nach Anspruch 7,
**dadurch gekennzeichnet, dass** die dehnungsarme Kunststofflage (3) an den Rändern der Barrierelage (2) schmaler als die Gesamtbreite der Folie (1) bemessen ist, derart, dass die Barrierelage (2) an den Rändern der Folie (1) einen Streifen der Barrierelage (2) unabgedeckt freilässt, wobei die Barrierelage (2) ableitfähig ist.

## Claims

1. Flexible container,
wherein the container forms an inliner for an outer container - such as a textile big bag, a cardboard packaging or a plastic sack or bag,
**characterised in that**
the container comprises a wall which is made of a film (1) with the following features:
the film (1) is designed in multiple layers,
with a barrier layer (2),
a low-stretch plastic layer (3),
and an antistatic plastic layer (4) which is arranged on the side of the barrier layer (2) that is opposite the low-stretch layer (3),
which is made of polyethylene (PE) provided with permanent antistatic agent, and which limits the breakdown voltage of the film (1) to less than 4 kV,
and **in that**
a layer is provided which forms the surface of the film (1) directed towards the interior of the container and is made of a polyethylene,
wherein
either this layer of the antistatic directed towards the interior of the container provided is adjacent to the plastic layer (4), facing away from the barrier layer (2) and as layer (5) is 5 to 20 µm thick, and the antistatic layer (4) 10 to 150 µm thick,
or the antistatic plastic layer (4) is designed as the layer made of polyethylene, containing polyethylene and an antistatic agent, directed towards the interior of the container.

2. Flexible container according to claim 1 or 2 **characterised in that** the barrier layer (2) is made of aluminium.

3. Flexible container according to any one of the preceding claims **characterised in that** the low-stretch layer (3) is made of polyester (PET).

4. Flexible container according to any one of the preceding claims **characterised in that** the layer (5) made of a food-safe material is made of polyethylene (PE).

5. Flexible container according to any one of the preceding claims **characterised in that** the antistatic layer (4) is around 70 to 100 µm thick.

6. Flexible container according to any one of the preceding claims **characterised in that** the surface of the film (1) opposite the low-stretch layer (3) is free of indentations.

7. Flexible container according to any one of the preceding claims **characterised in that** the film (1) is designed to be statically dischargeable.

8. Flexible container according to claim 7
**characterised in that** at the edges of the barrier layer (2) the low-stretch plastic layer (3) is dimensioned to be narrower than the entire width of the film (1) so that at the edges of the film (1) the barrier layer (2) leaves a strip of the barrier layer (2) uncovered, wherein the barrier layer (2) is statically dischargeable.

## Revendications

1. Récipient souple,
le récipient formant un revêtement intérieur pour un récipient extérieur (tel qu'un big-bag en matière textile, un emballage en carton ou un sac ou sachet constitué de matière plastique), **caractérisé en ce que**
le récipient comporte une paroi, laquelle est constituée d'un film (1) présentant les caractéristiques suivantes :
le film (1) est conçu en monocouches, avec une couche formant barrière (2),
une couche en matière plastique (3) résistant à l'allongement,
et une couche en matière plastique (4) antistatique, qui est placée sur la face de la couche formant barrière (2), laquelle est opposée à la couche en matière plastique (3) résistant à l'allongement,
qui est constituée d'un polyéthylène (PE) pourvu d'un agent antistatique permanent,
et laquelle délimite la tension de claquage du film (1) à moins de 4kV,
et **en ce qu'**il est prévu une couche, laquelle forme la surface du film (1) dirigée vers l'intérieur du récipient et laquelle est constituée d'un polyéthylène,
soit ladite couche dirigée vers l'intérieur du récipient de la couche en matière plastique (4) étant prévue au voisinage, à l'opposée de la couche formant barrière (2) et en tant que couche (5), présentant une épaisseur de 5 à 20 µm et la couche antistatique (4) présentant une épaisseur de 10 à 150 µm,
ou la couche en matière plastique (4) antistatique étant conçue comme étant la couche en polyéthylène dirigée vers l'intérieur du récipient, qui contient du polyéthylène et un agent antistatique.

2. Récipient souple selon la revendication 1 ou 2, **caractérisé en ce que** la couche formant barrière (2) est constituée d'aluminium.

3. Récipient souple selon l'une quelconque des revendications précédentes, **caractérisé en ce que** la couche (3) résistant à l'allongement est constituée de polyester (PET).

4. Récipient souple selon l'une quelconque des revendications précédentes, **caractérisé en ce que** la couche (5) constituée de la matière légalement apte au contact alimentaire est constituée de polyéthylène (PE).

5. Récipient souple selon l'une quelconque des revendications précédentes, **caractérisé en ce que** la couche antistatique (4) présente une épaisseur d'environ 70 à 100 µm.

6. Récipient souple selon l'une quelconque des revendications précédentes, **caractérisé en ce que** la surface du film (1) qui est opposée à la couche (3) résistant à l'allongement est exempte de creux.

7. Récipient souple selon l'une quelconque des revendications précédentes, **caractérisé en ce que** le film (1) est conçu avec une capacité de décharge.

8. Récipient souple selon la revendication 7, **caractérisé en ce que** sur les bords de la couche formant barrière (2), la couche en matière plastique (3) résistant à l'allongement est dimensionnée de sorte à être plus étroite que la largeur totale du film (1), de telle sorte que sur les bords du film (1), la couche formant barrière (2) laisse non recouvert un ruban de la couche formant barrière (2), la couche formant barrière (2) étant à capacité de décharge.
